# EUROPÄISCHE PATENTSCHRIFT

(11) **EP 1 082 769 B1**
(45) Veröffentlichungstag und Bekanntmachung des Hinweises auf die Patenterteilung: **19.11.2003**
(21) Anmeldenummer: 99920819.2
(22) Anmeldetag: 29.04.1999
(51) Int. Cl.: H01M 4/86, C25B 11/03

(54) **ELEKTRODE MIT FÜR EIN FLUID DURCHGÄNGIGEN POREN UND BRENNSTOFFZELLE**
ELECTRODE WITH PORES THROUGH WHICH A FLUID CAN PASS, AND FUEL CELL
ELECTRODE A PORES TRAVERSANTS POUR UN FLUIDE ET PILE A COMBUSTIBLE CORRESPONDANTE

(30) Priorität: 30.04.1998 DE 19819325
(43) Veröffentlichungstag der Anmeldung: 14.03.2001
(73) Patentinhaber: Emitec Gesellschaft für Emissionstechnologie mbH, 53797 Lohmar (DE)
(72) Erfinder: BRÜCK, Rolf, D-51429 Bergisch Gladbach (DE); BERGMANN, Andreé, D-53797 Lohmar (DE); KONIECZNY, Jörg-Roman, D-53721 Siegburg (DE)
(74) Vertreter: Kahlhöfer, Hermann, Dipl.-Phys.
(86) Internationale Anmeldenummer: EP9902920
(87) Internationale Veröffentlichungsnummer: WO99057773

(56) Entgegenhaltungen:
- DE-A- 2 618 410
- US-A- 4 260 469

## Beschreibung

Die vorliegende Erfindung betrifft eine Elektrode für eine Brennstoffzelle und eine Brennstoffzelle mit zwei Elektroden verschiedener Polarität, zwischen denen ein Elektrolyt angeordnet ist, wobei die Elektroden eine für ein Fluid, insbesondere für ein Gas, von einer gasseitigen Oberfläche zu einer elektrolytseitigen Oberfläche durchgängigen Poren mit einer Poreneintrittsöffnung und einer Porenaustrittsöffnung aufweist.

Ebenso wie in anderen galvanischen Elementen wird in Brennstoffzellen die, beispielsweise bei der chemischen Verbindung von Wasserstoff (H₂) mit Sauerstoff (O₂) freiwerdende Bindungsenergie in elektrische Energie und Wärme umgewandelt. Grundsätzlich unterscheidet man zwischen Niedertemperatur-Brennstoffzellen (bis ca. 200°C) und Hochtemperatur-Brennstoffzellen (etwa 600 bis 1100°C). Dazwischen liegen die sogenannten Schmelzkarbonate MCFC-Brennstoffzellen (Molten Carbonate Fuel Cell) mit einer Arbeitstemperatur von etwa 200 bis 600°C und mit einem in einer Matrix angeordneten Flüssigelektrolyten.

Hochtemperaturbrennstoffzellen, wie oxidkeramische Brennstoffzellen (SOFC; Solid Oxide Fuel Cell), enthalten beispielsweise einen Festelektrolyten aus Zirkondioxid der bei einer Arbeitstemperatur von 850 bis 1050°C ionenleitend ist. Sie werden überwiegend in stationären Anlagen für die dezentrale Energieversorgung betrieben.

Niedertemperatur-Brennstoffzellen könnten in Verbindung mit einem Elektromotor eine Alternative zu herkömmlichen Verbrennungsmotoren, insbesondere in Fahrzeugen und Bahnsystemen, darstellen.

Bei bekannten Elektro-Fahrzeugen wird die elektrische Energie zunächst in einem Kraftwerk erzeugt und dann an Bord in einer Batterie zwischengespeichert. Hohe Kosten, großes Gewicht, begrenzte Haltbarkeit und lange Aufladezeiten dieser Batterien sind Probleme, die bisher nicht zufriedenstellend gelöst werden konnten.

Besonders vielversprechend scheinen deshalb Konzepte, die ohne Zwischenspeicherung auskommen, den Strom also an Bord und je nach Bedarf erzeugen; insbesondere das Konzept der Brennstoffzellen mit einem protonenleitenden Membranelektrolyten, sogenannten Proton-Exchange-Membrane-Fuel-Cells (PEM-Brennstoffzellen). Der gasförmige Kraftstoff, insbesondere Wasserstoffgas und Sauerstoffgas, muß nicht verbrannt werden, sondern wird in einer sogenannten kalten Reaktion direkt in elektrische Energie und Wasserdampf umgewandelt. Der Elektrolyt in der PEM-Brennstoffzelle trennt die beiden Gase voneinander und verhindert eine sogenannte heiße Reaktion. Ein elektrochemischer Vorgang am Elektrolyten läßt nur Protonen, also positiv geladene Wasserstoff-Ionen (H⁺), passieren. Die Elektronen der Wasserstoff-Atome werden beim Durchgang abgeschieden und bleiben zurück, die Wasserstoff-Ionen reagieren mit den Sauerstoffteilchen auf der anderen Seite. Durch Elektronenüberschuß auf der Wasserstoffseite und Elektronenmangel auf der Sauerstoffseite des Elektrolyts liegt an den benachbarten Elektroden eine Potentialdifferenz an, so daß bei einer elektrischen Verbindung der Elektroden über einen äußeren Stromkreis, in dem ein Verbraucher geschaltet ist, ein elektrischer Strom von der Anode zu der Kathode fließt. Neben der elektrischen Energie entsteht Wärme sowie Wasser als Reaktionsprodukt.

Der Elektrolyt solcher PEM-Brennstoffzellen besteht aus einer nur zehntelmillimeterdicken protonenleitenden Polymerfolie. Die Elektroden sind mit einem platinhaltigen Katalysator beschichtet. Alternativ und/oder kumulativ kann aber auch die Polymerfolie auf beiden Seiten mit wenigstens einem Katalysator beschichtet sein. Der Katalysator unterstützt eine Ionisierung des Wasserstoffs sowie die Reaktion der Wasserstoff-Ionen mit dem Sauerstoff.

Die anderen eingangs beschriebenen Brennstoffzellentypen enthalten beispielsweise Katalysatoren aus Raney-Nickel, Wolframcarbid, Molybdän- oder Wolframsulfiden oder aus Phthalocyanin- und andere Chelat-Komplexen.

Alternativ und/oder kumulativ zum Wasserstoff (H₂) finden als Brennstoffe auch Kohlenwasserstoffe, insbesondere Methanol und Methan, Verwendung.

Bei den Niedertemperaturbrennstoffzellen, insbesondere den PEM-Brennstoffzellen, sind zur Förderung der Reaktion und Erzielung guter Wirkungsgrade die Oberflächen des Elektrolyts und/oder die elektrolytseitigen Oberflächen der benachbarten Elektroden feucht zu halten. Dazu ist beispielsweise aus der DE 43 18 818 C2 bekannt, die Brennstoffzelle mit befeuchteten Gasen zu betreiben.

Bei einem Stapel von in Serie geschalteten Brennstoffzellen sind zwischen benachbarten Brennstoffzellen sogenannte Bipolarplatten vorgesehen. Sie leiten in einem labyrinthartigen Kanalsystem den Brennstoff, insbesondere Wasserstoff, beziehungsweise die Luft an den gasseitigen Oberflächen der Elektroden beziehungsweise an den Eintrittsöffnungen der Poren entlang. Außerdem führen sie die Reaktionswärme ab und stellen die elektrische Verbindung zur Nachbarzelle her.

Das je nach Brennstoffzellen-Typ unter Normal- oder Hochdruck zugeführte Gas diffundiert durch die poröse Elektrode und reagiert, wie beschrieben von einem Katalysator unterstützt, am Elektrolyten.

Durch das Zusammenschalten vieler Brennstoffzellen in sogenannten Stacks (Stapel) wird ein Brennstoffzellensystem mit hoher Leistung bereitgestellt. Durch Regelung der Wasserstoffzufuhr kann die Energieabgabe des Systems unmittelbar erzeugt und genau dosiert werden.

Es ist Aufgabe der Erfindung, eine Elektrode und eine Brennstoffzelle mit einer Elektrode mit für ein Fluid, insbesondere für ein Gas, verbesserter Durchgängigkeit und Porosität unter Vermeidung der beschriebenen Nachteile anzugeben.

Diese Aufgabe wird erfindungsgemäß durch eine Brennstoffzelle mit den Merkmalen des Anspruchs 1 gelöst.

Weitere vorteilhafte Ausgestaltungen und Ausbildungen der Brennstoffzelle sind Gegenstand der jeweiligen abhängigen Ansprüche.

Die Elektrode zeichnet sich dadurch aus, daß die Flächensumme der Poreneintrittsöffnungen größer als die Flächensumme der Porenaustrittsöffnungen ist. Dadurch wird in vorteilhafter Weise eine bessere Durchgängigkeit der Elektrode für ein Fluid, insbesondere für ein Gas, erzielt und darüber hinaus der Feuchtigkeitsverlust der in Kontakt von Elektrolyt und elektrolytseitigen Oberfläche der Elektrode stehenden Schicht verringert.

Gemäß einer bevorzugten Ausbildung der Elektrode beträgt das Flächensummenverhältnis von Poreneintrittsöffnungen zu Porenaustrittsöffnungen wenigstens 2 : 1, vorzugsweise wenigstens 3 : 1, insbesondere etwa 4 : 1. Ein solches Flächensummenverhältnis begünstigt insbesondere die Gasdiffusion durch die poröse Elektrode.

Vorzugsweise sind die Poren wenigstens teilweise trichterförmig ausgebildet, so daß sich die Poren von der Eintrittsöffnung zur Austrittsöffnung hin verjüngen.

Alternativ und/oder kumulativ sind die Poren wenigstens teilweise gestuft ausgebildet, so daß die Poreneintrittsöffnungen einen größeren Querschnitt aufweisen als die Porenaustrittsöffnungen. Eine solche, wenigstens einfache Abstufung innerhalb der Poren läßt sich erfindungsgemäß bevorzugt beispielsweise dadurch erreichen, daß die Elektrode wenigstens zwei Schichten enthält, eine gasseitige Schicht und eine elektrolytseitige Schicht, wobei die gasseitige Schicht überwiegend Poren mit einem größeren Querschnitt als den der Poren in der elektrolytseitigen Schicht aufweist. Geschichtet aufgebaute Elektroden lassen sich fertigungstechnisch einfach und preiswert herstellen.

Elektroden mit einer solchen Porenstruktur enthalten vorzugsweise Graphit beziehungsweise bestehen wenigstens teilweise aus Graphit.

Elektroden, die mit wenigstens einem Katalysator beschichtet sind, zeichnen sich erfindungsgemäß bevorzugt dadurch aus, daß der Katalysator überwiegend benachbart zur elektrolytseitigen Oberfläche, vorzugsweise in den elektrolytseitigen Porenquerschnitten selbst, angeordnet ist. Durch eine solche Anordnung kann einerseits der Mengenverbrauch des vorzugsweise platinhaltigen Katalysators erheblich minimiert werden, wodurch die Brennstoffzelle preiswerter hergestellt werden kann. Andererseits ist der Katalysator in vorteilhafter Weise genau dort angeordnet, wo er die schon oben beschriebenen Reaktionen fördert und unterstützt.

Weitere Vorteile und Ausgestaltungen der vorliegenden Erfindung werden anhand exemplarischer Ausführungsbeispiele für eine PEM-Brennstoffzelle und anhand der Zeichnung beschrieben.

Es zeigen:
- Fig. 1: eine einschichtige Elektrode im Schnitt;
- Fig. 2: eine zweischichtige Elektrode im Schnitt; und
- Fig. 3: einen vergrößerten Ausschnitt einer Pore einer einschichtigen Elektrode nach Fig. 1 im Schnitt mit dem Unterschied, daß die Elektrode mit wenigstens einem Katalysator beschichtet ist.

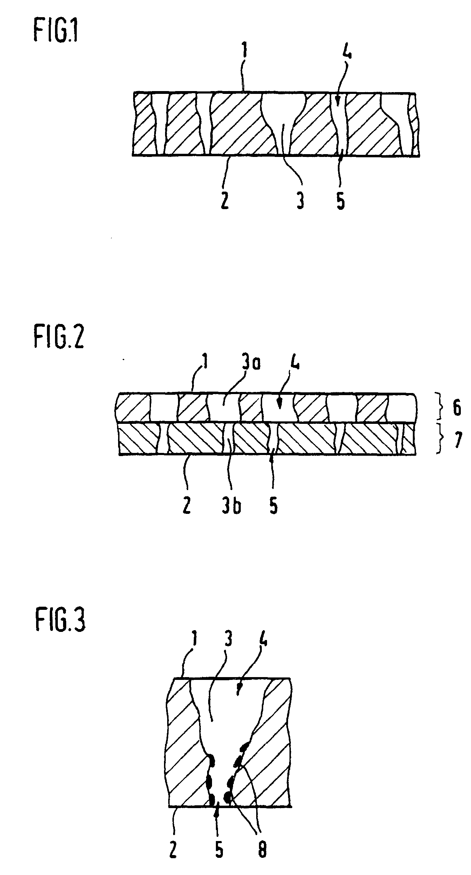

Fig. 1 zeigt eine einschichtige Elektrode im Schnitt, mit für ein Fluid, insbesondere für ein Gas, von einer gasseitigen Oberfläche 1 zu einer elektrolytseitigen Oberfläche 2 durchgängigen Poren 3 mit einer Poreneintrittsöffnung 4 und einer Porenaustrittsöffnung 5. Die Flächensumme der Poreneintrittsöffnungen 4 ist größer als die Flächensumme der Porenaustrittsöffnungen 5, wobei das Flächensummenverhältnis von Poreneintrittsöffnungen 4 zu Porenaustrittsöffnungen 5 wenigstens 2 : 1, vorzugsweise wenigstens 3 : 1, insbesondere etwa 4 : 1 beträgt. Die Poren 3 sind wenigstens teilweise trichterförmig ausgebildet, so daß sich die Poren 3 von der Poreneintrittsöffnung 4 zur Porenaustrittsöffnung 5 hin verjüngen. Die Elektroden sind vorzugsweise aus Graphit.

Alternativ und/oder kumulativ können die Poren 3 wenigstens teilweise gestuft ausgebildet sein, so daß die Poreneintrittsöffnungen 4 entsprechend den erfindungsgemäß bevorzugten Flächensummenverhältnissen einen größeren Querschnitt aufweisen als die Porenaustrittsöffnungen 5.

Nach Fig. 2 werden gestuft ausgebildete Poren 3 vorzugsweise dadurch gebildet, daß die Elektrode wenigstens zwei Schichten 6, 7 enthält, insbesondere eine gasseitige Schicht 6 und eine elektrolytseitige Schicht 7, wobei die gasseitige Schicht 6 überwiegend Poren 3a mit einem größeren Querschnitt als den der Poren 3b in der elektrolytseitigen Schicht 7 aufweist.

Fig. 3 zeigt einen vergrößerten Ausschnitt einer Pore einer einschichtigen Elektrode nach Fig. 1 im Schnitt mit dem Unterschied, daß die Elektrode mit wenigstens einem Katalysator 8 beschichtet ist. Der Katalysator 8 ist überwiegend benachbart zur elektrolytseitigen Oberfläche 2, vorzugsweise in elektrolytseitigen Porenquerschnitten angeordnet.

Erfindungsgemäße Brennstoffzellen mit Elektroden verschiedener Polarität sind in Verbindung mit einem Elektromotor eine Alternative zu herkömmlichen Verbrennungsmotoren, insbesondere in Fahrzeugen und Bahnsystemen.

### Bezugszeichenliste

- 1: gasseitige Oberfläche
- 2: elektrolytseitige Oberfläche
- 3, 3a, 3b: Pore
- 4: Poreneintrittsöffnung
- 5: Porenaustrittsöffnung
- 6: gasseitige Schicht
- 7: elektrolytseitige Schicht
- 8: Katalysator

## Patentansprüche

1. Brennstoffzelle mit zwei Elektroden verschiedener Polarität, zwischen denen ein Elektrolyt angeordnet ist, wobei wenigstens eine Elektrode mit für ein Gas von einer gasseitigen Oberfläche (1) zu einer elektrolytseitigen Oberfläche (2) durchgängigen Poren (3) mit einer Poreneintrittsöffnung (4) und einer Porenaustrittsöffnung (5) aufweist, **dadurch gekennzeichnet, daß** der Elektrolyt aus einem protonenleitenden Membranmaterial besteht und daß die Flächensumme der Poreneintrittsöffungen (4) größer als die Flächensumme der Porenaustrittsöffnungen (5) ist.

2. Brennstoffzelle nach Anspruch 1, **dadurch gekennzeichnet, daß** das Flächensummenverhältnis von Poreneintrittsöffnungen (4) zu Porenaustrittsöffnungen (5) wenigstens 2 : 1, vorzugsweise wenigstens 3 : 1, insbesondere etwa 4 : 1 beträgt.

3. Brennstoffzelle nach Anspruch 1 oder 2, **dadurch gekennzeichnet, daß** die Poren (3) wenigstens teilweise trichterförmig ausgebildet sind, so daß sich die Poren (3) von der Poreneintrittsöffnung (4) zur Porenaustrittsöffnung (5) hin verjüngen.

4. Brennstoffzelle nach einem der vorherigen Ansprüche, **dadurch gekennzeichnet, daß** die Poren (3) wenigstens teilweise gestuft ausgebildet sind, so daß die Poreneintrittsöffnungen (4) einen größeren Querschnitt aufweisen als die Porenaustrittsöffnungen (5).

5. Brennstoffzelle nach einem der vorherigen Ansprüche, **dadurch gekennzeichnet, daß** die Elektrode wenigstens zwei Schichten (6, 7) enthält, eine gasseitige Schicht (6) und eine elektrolytseitige Schicht (7), wobei die gasseitige Schicht (6) überwiegend Poren (3a) mit einem größeren Querschnitt als den der Poren (3b) in der elektrolytseitigen Schicht (7) aufweist.

6. Brennstoffzelle nach einem der vorherigen Ansprüche, **dadurch gekennzeichnet, daß** die Elektrode Graphit enthält.

7. Brennstoffzelle nach einem der vorherigen Ansprüche mit wenigstem einem Katalysator (8), **dadurch gekennzeichnet, daß** der Katalysator (8) in den Poren (3) und überwiegend benachbart zur elektrolytseitigen Oberfläche (2) angeordnet ist.

8. Brennstoffzelle nach Anspruch 7, **dadurch gekennzeichnet, daß** der Katalysator ein Edelmetall, vorzugsweise Platin, enthält.

## Claims

1. A fuel cell comprising two electrodes of different polarity, in between which an electrolyte is disposed, wherein at least one electrode comprises pores (3) being permeable for a gas from a gas-side surface (1) to an electrolyte-side surface (2), said pores comprising a pore inlet opening (4) and a pore outlet opening (5), **characterized in that** the electrolyte comprises a proton conducting membrane material and that the sum of the areas of the pore inlet openings (4) is larger than the sum of the areas of the pore outlet openings (5).

2. Fuel cell according to claim 1, **characterized in that** the total area ratio of the pore inlet openings (4) and the pore outlet openings (5) is at least 2:2, preferably at least 3: 1, especially around 4:1.

3. Fuel cell according to claim 1 or 2, **characterized in that** the pores (3) are formed at least partially funnel-shaped in such a way, that the pores taper from the pore inlet opening (4) to the pore outlet opening (5).

4. Fuel cell according to one of the preceding claims, **characterized in that** the pores (3) are at least partially step-shaped such that the pore inlet openings (4) have a larger cross-section than the pore outlet openings (5).

5. Fuel cell according to one of the preceding claims, **characterized in that** the electrode comprises at least two layers (6, 7), one gas-side layer (6) and one electrolyte side layer (7), wherein the gas-side layer (6) comprises predominantly pores (3a) with a larger cross-section than the cross-section of the pores (3b) in the electrolyte side layer (7).

6. Fuel cell according to one of the preceding claims, **characterized in that** the electrode comprises graphite.

7. Fuel cell according to one of the preceding claims with at least one catalyst (8) **characterized in that** the catalyst (8) is disposed in the pores (3) and predominantly adjacent to the electrolyte side surface (2).

8. Fuel cell according to claim 7, **characterized in that** the catalyst comprises a noble metal, preferably platinum.

## Revendications

1. Pile à combustible avec deux électrodes de polarité différente, entre lesquelles un électrolyte est disposé, dans quel cas au moins une électrode a des pores (3) qui sont perméables à un gaz à partir d'une surface coté gaz (1) vers une surface coté électrolyte (2), les pores comportant une ouverture d'entrée de pores (4) et une ouverture de sortie de pores (5), **caractérisée en ce que** l'électrolyte est constitué d'un matériau de membrane de conduction de protons et **en ce que** le total des surfaces des ouvertures d'entrée des pores (4) est plus grand que le total des surfaces des ouvertures de sortie des pores (5).

2. Pile à combustible selon la revendication 1, **caractérisée en ce que** le rapport de surface totale d'ouvertures d'entrée des pores (4) / ouvertures de sortie de pores (5) comporte au moins 2 : 1, de préférence au moins 3 : 1, notamment environ 4 : 1.

3. Pile à combustible selon la revendication 1 ou 2, **caractérisée en ce que** les pores (3) sont réalisés au moins partiellement en forme d'entonnoir, de sorte que les pores (3) s'amincissent à partir de l'ouverture d'entrée des pores (4) vers l'ouverture de sortie des pores (5).

4. Pile à combustible selon l'une des revendications précédentes, **caractérisée en ce que** les pores (3) sont réalisés au moins partiellement en forme de marches, de sorte que les ouvertures d'entrée des pores (4) ont une section transversale plus grande que les ouvertures de sortie des pores (5).

5. Pile à combustible selon l'une des revendications précédentes, **caractérisée en ce que** l'électrode comporte au moins deux couches (6, 7), une couche coté gaz (6) et une couche coté électrolyte (7), la couche coté gaz (6) comportant principalement des pores (3a) avec une section transversale plus grande que celle des pores (3b) dans la couche coté électrolyte (7).

6. Pile à combustible selon l'une des revendications précédentes, **caractérisée en ce que** l'électrode contient du graphite.

7. Pile à combustible selon l'une des revendications précédentes avec au moins un catalyseur (8), **caractérisée en ce que** le catalyseur (8) est disposé dans les pores (3) et principalement adjacent de la surface coté électrolyte (2).

8. Pile à combustible selon la revendication 7, **caractérisée en ce que** le catalyseur comporte un métal noble, de préférence du platine.
